# EUROPÄISCHE PATENTANMELDUNG

(11) **EP 3 764 674 A1**
(43) Veröffentlichungstag der Anmeldung: **13.01.2021**
(21) Anmeldenummer: 19185555.0
(22) Anmeldetag: 10.07.2019
(51) Int. Cl.: H04W 4/80, H04W 12/00, H04W 12/06, H04W 52/02

(54) **FUNKVERBINDUNG IM SANITÄRBEREICH**

(71) Anmelder: Geberit International AG, 8645 Jona (CH)
(72) Erfinder: PORTMANN, Florian, 8708 Männedorf (CH); RAISSLE, Daniel, 8852 Altendorf (CH); OBERHOLZER, Roland, 8610 Uster (CH); CODIROLI, Mattia, 8808 Pfäffikon SZ (CH); DIENER, Heinz, 8627 Grüningen (CH)
(74) Vertreter: Frischknecht, Harry Ralph

(57) **Zusammenfassung**

Ein Verfahren zur Herstellung einer Datenverbindung zwischen einem in einer Sanitäreinrichtung (1) eingebettetem Sanitäreinrichtung-Funkmodul (SF) und einem Master-Funkmodul (MF) wird vorgestellt, welches die folgenden Schritte umfasst:
Schritt B:
Betreiben des Sanitäreinrichtung-Funkmoduls (SF) in einem Modus in dem Aufmerksamkeitshinweise empfangen werden können aber nicht ausgesendet werden;
Schritt C:
Betreiben des Master-Funkmoduls (MF) in einem Modus in dem Aufmerksamkeitshinweise ausgesendet werden;
Schritt D:
Übertragen von Aktivierung-Daten von dem Master-Funkmodul (MF) auf das Sanitäreinrichtung-Funkmodul (SF);
Schritt E:
Betreiben des Sanitäreinrichtung-Funkmoduls (SF) in einem Modus in dem Aufmerksamkeitshinweise gesendet werden, und
Schritt F:
Betreiben des Master-Funkmoduls (MF) in einem Modus in dem Aufmerksamkeitshinweise empfangen werden können;
Schritt G:
Erstellen einer Datenverbindung zwischen dem Master-Funkmodul (MF) und dem Sanitäreinrichtung-Funkmodul (SF), bei welcher das Master-Funkmodul (MF) als Master operiert und das Sanitäreinrichtung-Funkmodul (SF) als Slave operiert.

Zudem werden zur Durchführung dieses Verfahrens geeignete Sanitäreinrichtungen (1), mobile Geräte (2) und Kombinationen vorgestellt.

## Beschreibung

### TECHNISCHES GEBIET

Die vorliegende Erfindung betrifft ein Verfahren zur Herstellung einer Datenverbindung zwischen einem in einer Sanitäreinrichtung eingebettetem Sanitäreinrichtung-Funkmodul und einem Master-Funkmodul nach Anspruch 1 sowie eine Sanitäreinrichtung nach Anspruch 11, ein mobiles Gerät nach Anspruch 14 und die Kombination aus Sanitäreinrichtung und mobilem Gerät.

### STAND DER TECHNIK

In Sanitäreinrichtungen integrierte Funkmodule, auch Sanitäreinrichtung-Funkmodule genannt, sind bekannt. Diese dienen z.B. dazu, Daten von in Sanitäreinrichtungen integrierte Sensoren per Funk zu übertragen oder in Sanitäreinrichtungen integrierte Vorrichtungen per Funk zu steuern.

Bevorzugt werden dabei Funkmodule verwendet, welche durch das periodische Aussenden von Aufmerksamkeitshinweisen (Englisch: *advertisements*) auf sich aufmerksam machen, wie es etwa bei der Bluetooth Low Energy Technologie der Fall ist. Das Aufmerksamkeitshinweise aussendende Funkmodul, im Fall von Bluetooth Low Energy auch *Peripheral* (oder *Broadcaster*) genannt, sendet Aufmerksamkeitshinweise aus, welche ein Aufmerksamkeitshinweise empfangendes Funkmodul, im Fall von Bluetooth Low Energy auch *Central* (oder *Observer*) genannt, empfängt. Das Aufmerksamkeitshinweise empfangende Funkmodul kann daraufhin eine Datenverbindung (Englisch: *data connection*) mit dem Aufmerksamkeitshinweise aussendendem Funkmodul aufbauen. Das in Datenverbindung stehende, ursprünglich Aufmerksamkeitshinweise aussendende Funkmodul wird *Slave* und das in Datenverbindung stehende, ursprünglich Aufmerksamkeitshinweise empfangende Funkmodul wird *Master* genannt. Dabei ist der Master typischerweise mit leistungsfähigen Komponenten drahtgestützt verbunden, welche die Hauptlast für anfallende Berechnungen etc. tragen, während der Slave typischerweise mit nur eingeschränkt leistungsfähige Komponenten drahtgestützt verbunden ist, wie es für eingebettete Funkmodule oft der Fall ist. In einem Beispiel ist ein als Master operierendes Funkmodul eines Smartphones mit einem als Slave operierendes Sanitäreinrichtung-Funkmodul verbunden, wobei das Sanitäreinrichtung-Funkmodul in eine Badewanne eingebettet und mit einem in diese integrierten Thermometer verbunden ist, dessen Daten es an das Smartphone sendet, in welchem die Daten dann weiterverarbeitet werden.

Gemäss dem Stand der Technik, sendet das Sanitäreinrichtung-Funkmodul permanent Aufmerksamkeitshinweise aus, um so für andere Geräte - im funktechnischen Sinne - sichtbar zu sein, damit sich diese mit ihm verbinden können. Gerade bei verbreiteten Funktechnologien, wie z.B. Bluetooth Low Energy, kann dies aber dazu führen, dass nicht nur Fachpersonal, sondern auch ein Dritter, beispielsweise mittels eines Smartphones, das Sanitäreinrichtung-Funkmodul wahrnehmen können. Dies kann zu Sicherheitsproblemen führen, da nicht sichergestellt werden kann, dass nur derjenige, der auch physisch Zugriff auf die Sanitäreinrichtung hat, auf das Sanitäreinrichtung-Funkmodul zugreifen kann. Zudem stossen Sanitäreinrichtung-Funkmodule auf Akzeptanzprobleme, da Besitzer von Sanitäreinrichtungen Sicherheits- oder Datenschutzbedenken entwickeln können, wenn diese mit Alltagsgeräten wahrnehmbar sind. Auch wird, durch die erwartete grosse Zahl von Funkmodulen in Folge des Internets der Dinge, zukünftig an vielen Orten eine sehr grosse Zahl von Funkmodulen sichtbar sein, was zu Verwirrung und Fehlern führen kann.

### DARSTELLUNG DER ERFINDUNG

Ausgehend von diesem Stand der Technik liegt der Erfindung insbesondere die Aufgabe zugrunde, ein Verfahren sowie Vorrichtungen anzugeben, welche die Nachteile des Standes der Technik überwinden. Insbesondere sollen Verfahren sowie Vorrichtungen angegeben werden, die das Erstellen einer Datenverbindung mittels einer Aufmerksamkeitshinweise nutzender Technologie ermöglichen, ohne, dass das Sanitäreinrichtung-Funkmodul permanent sichtbar ist.

Diese Aufgabe löst das Verfahren, die Sanitäreinrichtung, das mobile Gerät und die Kombination aus einer Sanitäreinrichtung und einem mobilen Gerät gemäss den unabhängigen Ansprüchen. Weitere Ausführungsformen sind in den abhängigen Ansprüchen angegeben.

Ein Verfahren zur Herstellung einer Datenverbindung zwischen einem in einer Sanitäreinrichtung eingebetteten Sanitäreinrichtung-Funkmodul und einem Master-Funkmodul, wobei das Master-Funkmodul und das Sanitäreinrichtung-Funkmodul dazu eingerichtet sind, Aufmerksamkeitshinweise auszusenden und zu empfangen, umfasst die folgenden Schritte:
- Schritt B:: Betreiben des Sanitäreinrichtung-Funkmoduls in einem Modus in dem Aufmerksamkeitshinweise empfangen werden können aber nicht ausgesendet werden;
- Schritt C:: Betreiben des Master-Funkmoduls in einem Modus in dem Aufmerksamkeitshinweise ausgesendet werden, wobei Schritt C bevorzugt parallel zu Schritt B durchgeführt wird;
- Schritt D:: Übertragen von Daten, welche vorzugsweise Aktivierung-Daten umfassen, von dem Master-Funkmodul auf das Sanitäreinrichtung-Funkmodul;
- Schritt E:: Betreiben des Sanitäreinrichtung-Funkmoduls in einem Modus in dem Aufmerksamkeitshinweise gesendet werden, und
- Schritt F:: Betreiben des Master-Funkmoduls in einem Modus in dem Aufmerksamkeitshinweise empfangen werden können, wobei Schritt F bevorzugt parallel zu Schritt E durchgeführt wird;
- Schritt G:: Erstellen einer Datenverbindung zwischen dem Master-Funkmodul und dem Sanitäreinrichtung-Funkmodul, bei welcher das Master-Funkmodul vorzugsweise als Master operiert und das Sanitäreinrichtung-Funkmodul vorzugsweise als Slave operiert.

Bevorzugt wird dieses Verfahren zur Herstellung einer Datenverbindung auf dem Gebiet der Sanitärtechnik eingesetzt. Das Verfahren ist aber auch für Funkmodule im Allgemeinen durchführbar, es kann also auch mit zwei Funkmodulen durchgeführt werden, von denen keines in eine Sanitäreinrichtung integriert ist.

Ein Modus, in dem Aufmerksamkeitshinweise empfangen werden können, wird auch Scan-Modus (Englisch: *scanning mode*) genannt. Ein Modus, in dem Aufmerksamkeitshinweise ausgesendet werden, wird auch Advertising-Modus (auch Werbe-Modus genannt, Englisch: *advertising mode*) genannt. Es wird also
- in Schritt B das Sanitäreinrichtung-Funkmodul in einem Scan-Modus, aber nicht in einem Advertising-Modus betrieben;
- in Schritt C das Master-Funkmodul in einem Advertising-Modus betrieben, wobei optional das Master-Funkmodul parallel dazu auch in einem Scan-Modus betrieben werden kann;
- in Schritt E das Sanitäreinrichtung-Funkmodul in einem Advertising-Modus betrieben, wobei optional das Sanitäreinrichtung-Funkmodul parallel dazu auch in einem Scan-Modus betrieben werden kann; und
- in Schritt F das Master-Funkmodul in einem Scan-Modus betrieben, wobei optional das Master-Funkmodul parallel dazu auch in einem Advertising-Modus betrieben werden kann.

Bevorzugt wird das Sanitäreinrichtung-Funkmodul in Schritt E nicht parallel zu dem Advertising-Modus auch in einem Scan-Modus betrieben.

Bevorzugt werden Schritt B und Schritt C parallel zueinander durchgeführt. Schritt C kann vor, gleichzeitig mit oder nach Schritt B gestartet werden.

Bevorzugt wird Schritt D nicht vor den Schritten B und C durchgeführt. Vorzugsweise wird Schritt D nach den Schritten B und C durchgeführt.

Bevorzugt wird Schritt E nicht vor Schritt D durchgeführt. Vorzugsweise wird Schritt E nach Schritt D durchgeführt.

Bevorzugt werden Schritt E und Schritt F gleichzeitig ausgeführt. Schritt F kann vor, gleichzeitig mit oder nach Schritt E gestartet werden.

Bevorzugt wird Schritt G nicht vor den Schritten B bis F, insbesondere nicht vor den Schritten E und F, durchgeführt. Vorzugsweise wird Schritt G nach Schritt E durchgeführt.

In einigen Varianten wird Schritt B vor Schritt E gestartet. Das Sanitäreinrichtung-Funkmodul ist also zunächst nicht sichtbar, weil es keine Aufmerksamkeitshinweise aussendet, und wird erst bei der Durchführung von Schritt E sichtbar, nämlich wenn es beginnt Aufmerksamkeitshinweise auszusenden. Vorzugsweise wird Schritt B vor den Schritten D, E und G, gestartet, so dass Schritt B der - aus der Perspektive des Sanitäreinrichtung-Funkmoduls - erste der Schritte B bis G ist, wobei die einzig das Master-Funkmodul betreffenden Schritte C und F natürlich schon vor und/oder mit dem Schritt B gestartet werden können.

In einigen Varianten
- werden die Schritte B und C parallel zueinander durchgeführt;
- wird Schritt D nicht vor den Schritten B und C gestartet,
   ∘ wobei Schritt D bevorzugt erst gestartet wird, nachdem mindestens ein von dem Master-Funkmodul ausgesendeter Aufmerksamkeitshinweis von dem Sanitäreinrichtung-Funkmodul empfangen wurde;
- werden die Schritte E und F parallel zueinander durchgeführt,
   ∘ wobei Schritt E bevorzugt erst gestartet wird, wenn Daten, insbesondere Aktivierungsdaten, in Schritt D übertragen wurden; und/oder
- wird Schritt G nicht vor den Schritten E und F gestartet,
   ∘ wobei Schritt G bevorzugt erst gestartet wird, nachdem mindestens ein von dem Sanitäreinrichtung-Funkmodul ausgesendeter Aufmerksamkeitshinweis von dem Master-Funkmodul empfangen wurde.

Ein als Master operierendes Funkmodul kann dazu eingerichtet sein, parallel mit mehreren unterschiedlichen, als Slave operierenden Funkmodulen eine Datenverbindung unterhalten. Ein als Slave operierendes Funkmodul kann dazu eingerichtet sein, zu einem Zeitpunkt immer nur maximal eine Datenverbindung zu unterhalten.

In einigen Varianten umfasst das Verfahren den
Schritt A: Initiieren von Schritt B.

Vorzugsweise umfasst Schritt A
- eine Manipulation der Stromspeisung des Sanitäreinrichtung-Funkmoduls oder eines damit verbundenen Gerätes;
- eine Aktion an einem mit dem Sanitäreinrichtung-Funkmodul verbundenen Sensors;
- ein drahtgebundenes Signal, bevorzugt das Auslösen eines drahtgebundenen Signals; und/oder
- ein nicht-drahtgebundenes Signal, bevorzugt das Auslösen eines nicht-drahtgebundenen Signals.

Bevorzugt wird Schritt B nach dessen Beginn, insbesondere nach dessen Auslösung, nur eine erste beschränkte Zeit lang durchgeführt. Vorzugsweise beträgt diese erste beschränkte Zeit 60 Sekunden oder weniger, bevorzugt 15 Sekunden oder weniger. Nach dem Ablauf der ersten beschränkten Zeit schaltet das Sanitäreinrichtung-Funkmodul bevorzugt in einem Modus, in welchem es keine Aufmerksamkeitshinweise mehr empfangen kann. Vorzugsweise kann das Sanitäreinrichtung-Funkmodul in einen Standby-Modus schalten, in welchem das Sanitäreinrichtung-Funkmodul Aufmerksamkeitshinweise weder aussendet noch empfangen kann. Die erste beschränkte Zeit kann in Abhängigkeit von der Einbausituation des Sanitäreinrichtung-Funkmodul gewählt werden. Beispielsweise kann die erste beschränkte Zeit länger gewählt werden, wenn, z.B. aufgrund der Distanz, der Art des Baumaterials und/oder der Masse des Baumaterials, damit gerechnet werden muss, dass die Empfangsqualität zwischen dem Sanitäreinrichtung-Funkmodul und einer erwarteten Position des Master-Funkmoduls beeinträchtigt ist, so dass es z.B. länger dauern kann, in Schritt D die Daten zu übertragen oder in Schritt G die Datenverbindung zu erstellen. Als erwartete Position des Master-Funkmoduls kann z.B. jene Position angenommen werden, an der ein Initiierungsmittel zur Initiierung des Schrittes B oder ein Bereitstellungsmittel zur Bereitstellung von Authentifizierung-Daten angeordnet ist.

Bevorzugt wird Schritt E nur eine zweite beschränkte Zeit lang durchgeführt, so dass das Sanitäreinrichtung-Funkmodul nur diese zweite beschränkte Zeit lang funktechnisch sichtbar ist. Vorzugsweise beträgt diese zweite beschränkte Zeit 60 Sekunden oder weniger, bevorzugt 15 Sekunden oder weniger. Nach dem Ablauf der zweiten beschränkten Zeit schaltet das Sanitäreinrichtung-Funkmodul bevorzugt in einem Modus, in welchem es keine Aufmerksamkeitshinweise mehr aussendet. Vorzugsweise kann das Sanitäreinrichtung-Funkmodul in einen Standby-Modus schalten, in welchem das Sanitäreinrichtung-Funkmodul Aufmerksamkeitshinweise weder aussendet noch empfangen kann. Auch die zweite beschränkte Zeit, analog zu der ersten beschränkten Zeit, kann in Abhängigkeit von der Einbausituation des Sanitäreinrichtung-Funkmodul gewählt werden. Bevorzugt wird die Länge der zweiten beschränkten Zeit im Wesentlichen gleich zu der Länge der ersten beschränkten Zeit gewählt.

Vorzugsweise werden im Schritt D im Wesentlichen lediglich Daten von dem Master-Funkmodul auf das Sanitäreinrichtung-Funkmodul übertragen. Im Fall von Bluetooth Low Energy Funkmodulen kann dies z.B. über einen Broadcast erfolgen.

In einigen Varianten wird vor Schritt D eine Datenverbindung zwischen dem Sanitäreinrichtung-Funkmodul und dem Master-Funkmodul erstellt. Vorzugsweise operiert bei dieser das Sanitäreinrichtung-Funkmodul als Master und das Master-Funkmodul als Slave. Die Daten in Schritt D werden bevorzugt über diese Datenverbindung übertragen.

In einigen Varianten werden Schritt C und Schritt D parallel zueinander durchgeführt, wobei vorzugsweise zusammen mit den Aufmerksamkeitshinweisen auch Daten, welche vorzugsweise Aktivierung-Daten umfassen, von dem Master-Funkmodul ausgesendet werden und von dem Sanitäreinrichtung-Funkmodul empfangen werden.

Bevorzugt umfasst Schritt D das Übertragen von Aktivierung-Daten. Das Sanitäreinrichtung-Funkmodul ist vorzugsweise dazu eingerichtet, dass es nur dann in einen Advertising-Modus schaltet, wenn zuvor Aktivierung-Daten an das Sanitäreinrichtung-Funkmodul übertragen wurden. Aktivierung-Daten werden bevorzugt verschlüsselt übertragen. Vorzugsweise wird das Sanitäreinrichtung-Funkmoduls nach Übertragung von Aktivierung-Daten automatisch aktiviert. Es ist aber auch denkbar, dass weitere Schritte zum Schalten des Sanitäreinrichtung-Funkmoduls einen Advertising-Modus nötig sind, beispielsweise eine Manipulation (z.B. eines Schalters), eine Aktion (z.B. an einem mit dem Sanitäreinrichtung-Funkmodul verbundenen Sensors) und/oder ein Auslösen eines drahtgebundenen oder nicht-drahtgebundenen Signals.

Die Aktivierung-Daten umfassen bevorzugt Befehle des Master-Funkmoduls an das Sanitäreinrichtung-Funkmodul und/oder Authentifizierung-Daten. Die Befehle umfassen vorzugsweise die Anweisung an das Sanitäreinrichtung-Funkmodul, den Schritt E, also einen Betrieb im Advertising-Modus, zu starten. Authentifizierung-Daten sind vorzugsweise Daten, durch welche das Sanitäreinrichtung-Funkmodul verifizieren kann, dass übertragene Befehle auszuführen sind.

Authentifizierung-Daten umfassen bevorzugt Zugriffs-Daten und/oder Identifizierung-Daten. Zugriff-Daten sind Daten, auf welche vor Ort bei physischem Zugriff auf die Sanitäreinrichtung zugegriffen werden kann. Diese sind bevorzugt auf einem Bereitstellungsmittel, z.B. einem Aufkleber, an der Sanitäreinrichtung angeordnet und vorzugsweise als Zeichenfolge und/oder als Bildmuster ausgebildet. Identifizierung-Daten sind vorzugsweise Daten, welche dazu dienen, dass das Sanitäreinrichtung-Funkmodul verifizieren kann, dass gerade dieses spezifische Sanitäreinrichtung-Funkmodul angesprochen werden soll. Identifizierung-Daten können beispielsweise eine Seriennummer des Sanitäreinrichtung-Funkmoduls umfassen.

Bevorzugt werden vor Schritt D Authentifizierung-Daten erfasst. Vorzugsweise wird mit einem mobilen Gerät, welches das Master-Funkmodul umfasst und/oder mit diesem verbunden ist, an der Sanitäreinrichtung angeordnete Authentifizierung-Daten, beispielsweise in Form von Zugriff-Daten, vor Ort erfasst. Bevorzugt werden die erfassten Authentifizierung-Daten in Schritt D von dem Master-Funkmodul auf das Sanitäreinrichtung-Funkmodul übertragen.

Bevorzugt wird Schritt E nur durchführt, wenn in Schritt D Authentifizierung-Daten übertragen wurden, vorzugsweise Authentifizierung-Daten, welche das Sanitäreinrichtung-Funkmodul verifizieren konnte. Die Authentifizierung-Daten können vor Schritt D vor Ort erfasst worden sein und/oder anderweitig zur Verfügung gestellt worden sein.

In dem vorgestellten Verfahren wird bevorzugt eine Bluetooth Low Energy Technologie verwendet, vorzugsweise nach Bluetooth-Spezifikation 4.0, 4.1, 4.2 und/oder 5.0. Das Master-Funkmodul und das Sanitäreinrichtung-Funkmodul sind bevorzugt dazu eingerichtet, sich über eine Bluetooth Low Energy Technologie, insbesondere miteinander, zu verbinden. Vorzugsweise operiert
- in Schritt B das Sanitäreinrichtung-Funkmodul als Central oder Observer;
- in Schritt C das Master-Funkmodul als Peripheral resp. Broadcaster; und/oder
- in Schritt E das Sanitäreinrichtung-Funkmodul als Peripheral.

Zudem wird ein Computerprogramm vorgeschlagen, welches Befehle zur Ausführung eines hierin beschriebenen Verfahrens umfasst. Insbesondere wird ein erstes Computerprogramm sowie ein zweites Computerprogramm vorgeschlagen, wobei das erste Computerprogram Befehle zur Ausführung der an dem Sanitäreinrichtung-Funkmodul vorzunehmenden Tätigkeiten umfasst und das zweite Computerprogramm Befehle zur Ausführung der an dem Master-Funkmodul vorzunehmenden Tätigkeiten umfasst. Darüber hinaus wird ein Speichermedium umfassend eines der hierin beschriebenen Computerprogramme vorgeschlagen.

Es wird zudem eine Sanitäreinrichtung mit einem darin eingebetteten Sanitäreinrichtung-Funkmodul vorgeschlagen, wobei das Sanitäreinrichtung-Funkmodul zur Durchführung eines hierin beschriebenen Verfahrens konfiguriert ist.

In einigen Varianten weist die Sanitäreinrichtung ein Initiierungsmittel zur Initiierung des Schrittes B auf. Das Initiierungsmittel umfasst vorzugsweise:
- ein Mittel zur Manipulation der Stromspeisung des Sanitäreinrichtung-Funkmoduls oder eines anderen, mit dem Sanitäreinrichtung-Funkmodul verbundenen Gerätes;
- einen mit dem Sanitäreinrichtung-Funkmodul verbundenen Sensor; und/oder
- einen Auslöser zur Auslösung eines drahtgebundenen und/oder nicht drahtgebundenen Signals.

Der Auslöser ist vorzugsweise von einer Aussenseite der Sanitäreinrichtung aus auslösbar ist. Bevorzugt ist der Auslöser an einer Aussenseite der Sanitäreinrichtung angeordnet. Der Auslöser ist vorzugsweise so angeordnet, dass dieser im Normalbetrieb ohne den Einsatz von Werkzeugen zugänglich ist.

In einigen Varianten ist ein Bereitstellungsmittel zur Bereitstellung von Authentifizierung-Daten, insbesondere von Zugriff-Daten und/oder Identifizierung-Daten, an der Sanitäreinrichtung angeordnet. Das Bereitstellungsmittel umfasst vorzugweise eine Zeichenfolge und/oder ein Bildmuster. Das Bildmuster kann eindimensional, zweidimensional und/oder dreidimensional ausgebildet sein. Das Bildmuster kann beispielsweise einen QR-Code, einen Barcode, einen Datamatrix-Code, einen MaxiCode und/oder einen Aztec-Code umfassen. Bevorzugt umfasst das Bereitstellungsmittel einen Aufkleber, z.B. einen Aufkleber mit einer Zeichenfolge und/oder einem Bildmuster. Das Bereitstellungsmittel ist vorzugsweise an einer Aussenseite der Sanitäreinrichtung angeordnet und/oder so angeordnet, dass dieses im Normalbetrieb ohne den Einsatz von Werkzeugen zugänglich ist.

Es wird zudem ein mobiles Gerät mit einem Master-Funkmodul vorgeschlagen, wobei das Master-Funkmodul zur Durchführung eines hierin beschriebenen Verfahrens konfiguriert ist. Das mobile Gerät kann bevorzugt als Smartphone, Smart-Watch, Tablet, Laptop, etc. ausgebildet sein.

Zudem wird eine Kombination aus einer hierin beschriebenen Sanitäreinrichtung und einem hierin beschriebenen mobilen Gerät vorgeschlagen, mit welchen ein hierin beschriebenes Verfahren durchgeführt werden kann.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen schematisch:
- Fig. 1: eine Kombination aus einer Sanitäreinrichtung mit einem Sanitäreinrichtung-Funkmodul und einem mobilen Gerät mit einem Master-Funkmodul;
- Fig. 2: die Kombination mit einem Bildmuster;
- Fig. 3: die Kombination mit einem Initiierungsmittel und im Zustand der Durchführung von Schritt A;
- Fig. 4: die Kombination im Zustand der Durchführung von Schritt B;
- Fig. 5: die Kombination im Zustand der Durchführung von Schritten B und C;
- Fig. 6: die Kombination im Zustand der Durchführung von Schritt D;
- Fig. 7: die Kombination im Zustand der Durchführung von Schritt E;
- Fig. 8: die Kombination im Zustand der Durchführung von Schritten E und F;
- Fig. 9: die Kombination im Zustand der Durchführung von Schritt G;
- Fig. 10: ein Flussdiagramm zur möglichen Durchführung eines vorgestellten Verfahrens; und
- Fig. 11: ein Flussdiagramm einer Variante des in Fig. 10 gezeigten Verfahrens.

### BESCHREIBUNG BEVORZUGTER AUSFÜHRUNGSFORMEN

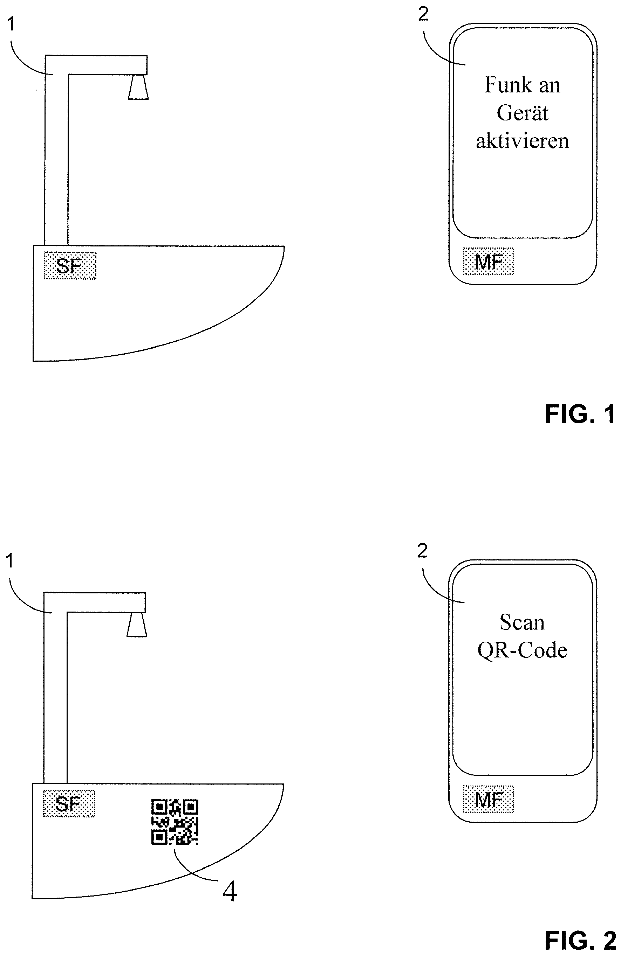

**Figur 1** zeigt eine Kombination aufweisend eine Sanitäreinrichtung 1 mit einem Sanitäreinrichtung-Funkmodul SF und einem mobilen Gerät 2 mit einem Master-Funkmodul MF. Das Sanitäreinrichtung-Funkmodul SF ist dazu ausgebildet, in einer Datenverbindung als Slave zu operieren, während das Master-Funkmodul MF dazu ausgebildet ist, in einer Datenverbindung als Master zu operieren. Die Funkmodule MF, SF sind bevorzugt dazu eingerichtet sich über die Bluetooth Low Energy Funk-Technologie zu verbinden; das vorgestellte Verfahren kann jedoch für jede andere Aufmerksamkeitshinweise nutzende Verbindung-Technologie angewendet werden. Das mobile Gerät 2 kann z.B. als Smartphone, als Smart-Watch, als Tablet, als Laptop etc. ausgebildet sein; wesentlich ist lediglich, dass es mit einem Master-Funkmodul MF verbunden ist und dessen Bedienung ermöglicht. In den Figuren ist die Sanitäreinrichtung 1 exemplarisch als Waschbecken ausgebildet, aber selbstverständlich kann das Sanitäreinrichtung-Funkmodul SF auch in jede anderen geeigneten Sanitäreinrichtung 1 integriert sein, z.B. eine Toilette, ein Spülkasten, eine Badewanne etc.

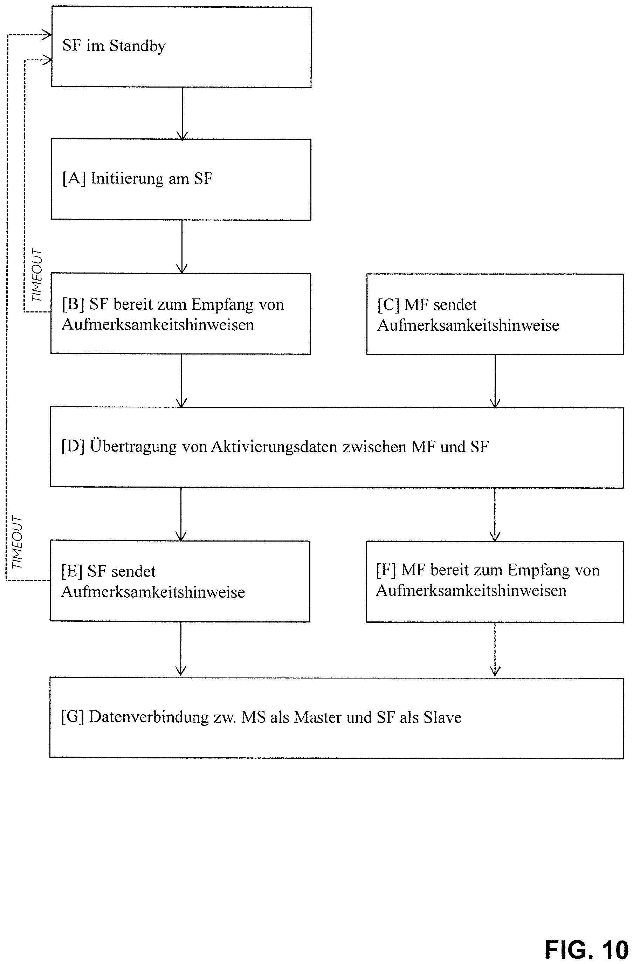

**In** **Figur 10** ist ein bevorzugtes Beispiel für das vorgestellte Verfahren als Flussdiagramm dargestellt. In einer möglichen, beispielsweise der in Figur 1 dargestellten, Ausgangssituation, befindet sich das Sanitäreinrichtung-Funkmodul SF in einem Standby-Modus, in welchem es weder Aufmerksamkeitshinweise aussendet noch empfangen kann. Auf dem mobilen Gerät 2 kann ein Benutzer, z.B. ein Installateur, eine Software, z.B. mit Namen "Funk an Gerät aktivieren", starten, welche ihm bei dem Verfahren anleitet.

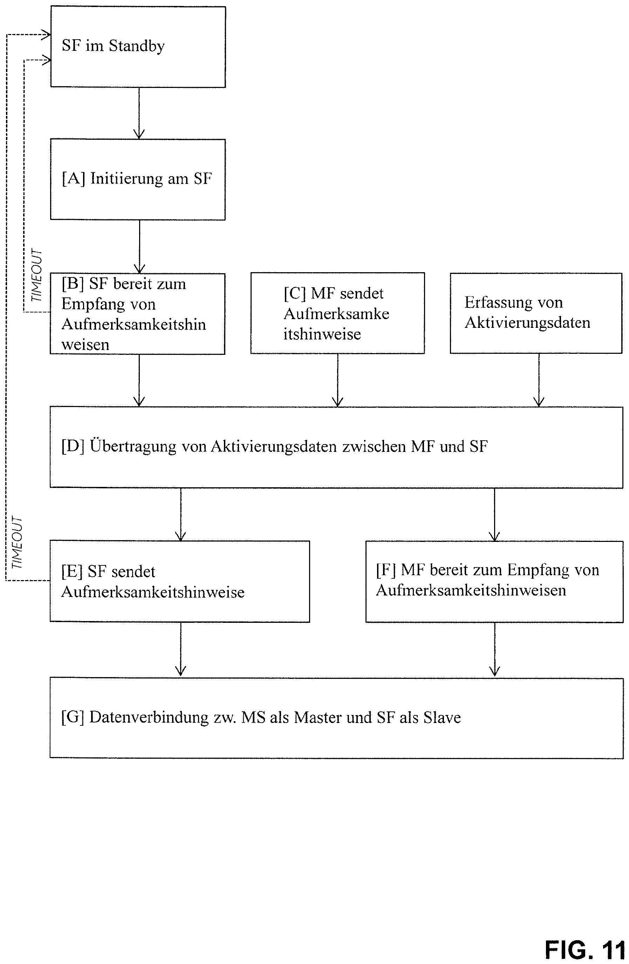

Vor dem Ausführen des Schrittes D werden vorzugweise Aktivierungsdaten erfasst. **Figur 11** zeigt das Verfahren gemäss Figur 10, wobei zusätzlich noch der Schritt der Erfassung der Aktivierungsdaten verzeichnet ist.

Bevorzugt ist an der Sanitäreinrichtung 1 ein Bereitstellungsmittel 4 zur Bereitstellung von Authentifizierung-Daten angeordnet. Das Bereitstellungsmittel 4 umfasst vorzugsweise ein Bildmuster, welches in **Figur 2** exemplarisch als QR-Code dargestellt ist. Auf dem mobilen Gerät 2 wird dem Benutzer angezeigt, dass er mit dem mobilen Gerät 2 das Bildmuster erfassen soll. Eine Software auf dem mobilen Gerät 2 stellt auf Grundlage des erfassten Bildmusters Authentifizierung-Daten zur Verfügung, beispielsweise indem es diese auf dem Bildmuster erkennt, diese aus dem Bildmuster berechnet und/oder diese mit Hilfe des Bildmusters aus einer internen und/oder Server-seitigen Datenbank erhält. Zusätzlich oder alternativ kann ein Benutzer wenigstens einen Teil der Authentifizierung-Daten manuell in das mobile Gerät 2 eingeben.

In einigen Varianten stellen das besagte Bereitstellungsmittel 4 und/oder ein zweites an der Sanitäreinrichtung 1 angeordnetes Bereitstellungsmittel 4 Identifikation-Daten betreffend das in der Sanitäreinrichtung 1 eingebettete Sanitäreinrichtung-Funkmodul SF zur Verfügung.

Die Aktivierungsdaten können auf dem mobilen Gerät 2 gespeichert sein, so dass sie nicht vor jedem Zugriff neu erfasst werden müssen.

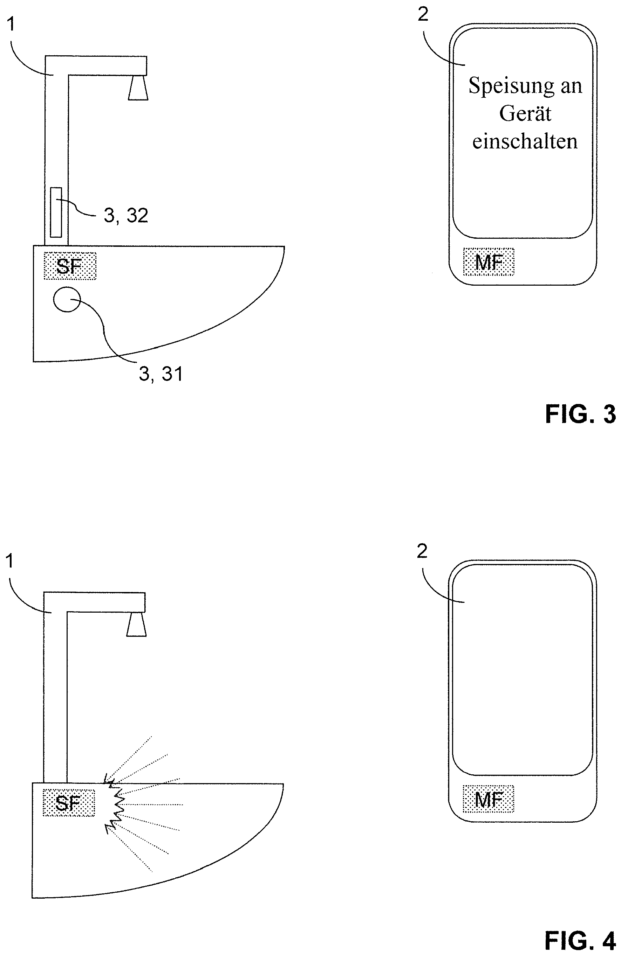

Wie in **Figur 3** dargestellt, zeigt die Software dem Benutzer an, dass er in einem Schritt A eine Initiierungshandlung vornehmen soll, um das weitere Sanitäreinrichtung-Funkmodulseitige Verfahren, insbesondere den Schritt B, zu initiieren. An der Sanitäreinrichtung 1 kann ein Initiierungsmittel 3 angeordnet sein, welches es ermöglicht, an das Sanitäreinrichtung-Funkmodul SF ein Signal zur Initiierung zu senden. Das Initiierungsmittel 3 kann vorzugsweise als Mittel zur Manipulation der Stromspeisung 31 ausgebildet sein, durch dessen Manipulation beispielsweise die Stromspeisung des Sanitäreinrichtung-Funkmoduls SF eingeschaltet wird. Das Initiierungsmittel 3 kann aber z.B. auch als Sensor 32 ausgebildet sein, an welchem zur Initiierung eine bestimmte Aktion ausgeführt werden muss.

Wie in **Figur 4** dargestellt, wird in einem Schritt B das Sanitäreinrichtung-Funkmodul SF in einem Modus betrieben, in welchem es Aufmerksamkeitshinweise empfangen kann, aber keine Aufmerksamkeitshinweise aussendet. Während des Schrittes B sendet das Sanitäreinrichtung-Funkmodul SF selber also keine Aufmerksamkeitshinweise aus und ist in diesem Sinne funktechnisch nicht sichtbar. Vorzugsweise ist das Sanitäreinrichtung-Funkmodul SF dazu konfiguriert, den Schritt B lediglich eine vordefinierte, erste beschränkte Zeit lang durchzuführen, beispielsweise 60 Sekunden oder weniger, wodurch sichergestellt ist, dass das Sanitäreinrichtung-Funkmodul SF nicht aus Versehen permanent scannt. Bevorzugt wird bei Überschreiten dieses sogenannten *time-out* das Sanitäreinrichtung-Funkmodul SF wieder in den Standby-Modus geschaltet.

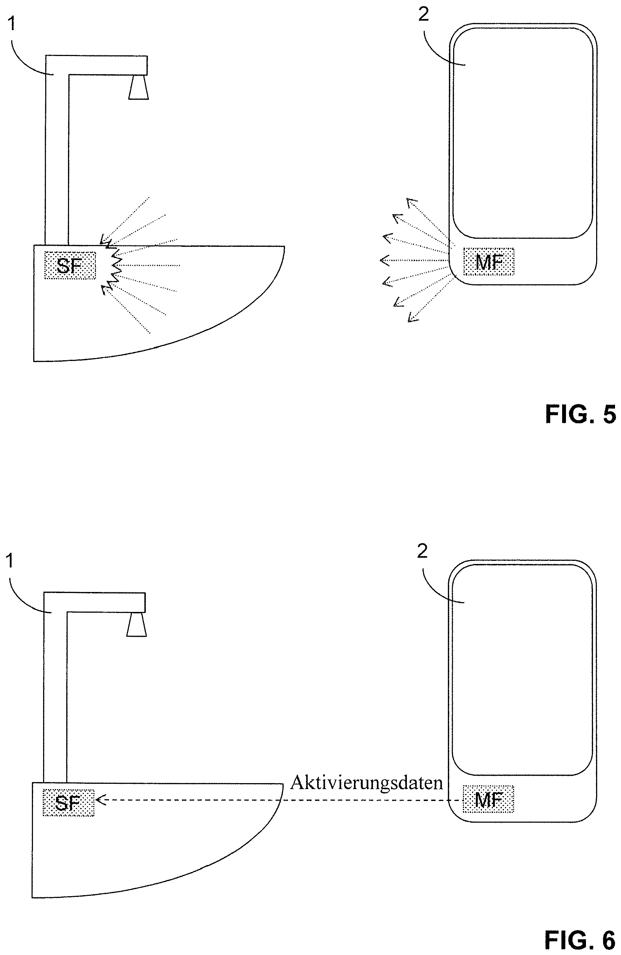

In einem Schritt C wird das Master-Funkmodul MF in einem Modus betrieben, in welchem es Aufmerksamkeitshinweise aussendet. Dabei ist es irrelevant, ob Schritt C vor, mit oder nach Schritt B begonnen wird, solange, wie in **Figur 5** dargestellt, zu wenigstens in einem gewissen Zeitintervall das Master-Funkmodul MF Aufmerksamkeitshinweise aussendet und das Sanitäreinrichtung-Funkmodul SF diese empfangen kann.

Dadurch ist es möglich, dass sich das Sanitäreinrichtung-Funkmodul SF und das Master-Funkmodul MF funktechnisch finden und - wie in **Figur 6** dargestellt - in einem Schritt D Daten von dem Master-Funkmodul MF auf den Sanitäreinrichtung-Funkmodul SF übertragen werden. Die Daten werden vorzugsweise in einem Broadcast von dem Master-Funkmodul MF auf das Sanitäreinrichtung-Funkmodul SF übertragen. Alternativ kann eine Datenverbindung hergestellt werden, in welcher das Sanitäreinrichtung-Funkmodul SF als Master und das Master-Funkmodul MF als Slave operieren, über welche die Daten von dem Master-Funkmodul MF auf das Sanitäreinrichtung-Funkmodul SF übertragen werden.

Die in Schritt D übertragenen Daten umfassen, neben den für einen Broadcast bzw. eine Daten-Verbindung üblichen Daten, bevorzugt Aktivierung-Daten, welche vorzugsweise Authentifizierung-Daten und/oder Befehle umfassen. Die Authentifizierung-Daten umfassen bevorzugt Zugriff-Daten, welche vor Ort erfassbar sind, und/oder Identifikation-Daten, z.B. eine Seriennummer des Sanitäreinrichtung-Funkmoduls SF. Die Aktivierung-Daten, insbesondere die Authentifizierung-Daten, werden vorzugsweise verschlüsselt übertragen.

In einem Beispiel werden die Aktivierung-Daten verschlüsselt übertragen. Da es die gewählte Verschlüsselung zu sinnvollen Daten entschlüsseln kann, schliesst das Sanitäreinrichtung-Funkmodul SF daraus, dass das Master-Funkmodul MF vertrauenswürdig ist. Die Aktivierung-Daten umfassen Zugriff-Daten, aus welchen das Sanitäreinrichtung-Funkmodul SF schliesst, dass der Benutzer physischen Zugriff auf die Sanitäreinrichtung 1 hat, sowie Identifikation-Daten, aus welchen das Sanitäreinrichtung-Funkmodul SF schliesst, dass gerade dieses spezifische Sanitäreinrichtung-Funkmodul SF angesprochen werden soll. Da die Aktivierung-Daten diesen dreifachen Test bestehen, führt das Sanitäreinrichtung-Funkmodul SF die mit den Aktivierung-Daten übermittelten Befehle aus und startet beispielsweise den Schritt E.

Die Zugriff-Daten kann der Benutzer vor Ort erfassen, z.B. an einem an der Sanitäreinrichtung 1 angeordnete Bereitstellungsmittel 4. Die Identifikation-Daten kann der Benutzer beispielsweise ebenfalls vor Ort erfassen und/oder aus einer (bevorzugt nicht-öffentlichen) Datenbank extrahieren, in welcher, im Zusammenhang mit dem Einbau des Sanitäreinrichtung-Funkmoduls SF, die fraglichen Identifikation-Daten nachgehalten wurden. Das zu verwendende kryptographische Verfahren und/oder der zu verwendende kryptographische Schlüssel können z.B. durch den Hersteller festgelegt sein, so dass nur vom Hersteller autorisierte Geräte auf das Sanitäreinrichtung-Funkmodul SF zugreifen können. Zudem oder alternativ dazu können die kryptographischen Daten in einer (bevorzugt nicht-öffentlichen) Datenbank nachgehalten sein, wenn beispielsweise für unterschiedliche eingebaute Sanitäreinrichtung-Funkmodule SF unterschiedliche kryptographischen Daten verwendet werden sollen.

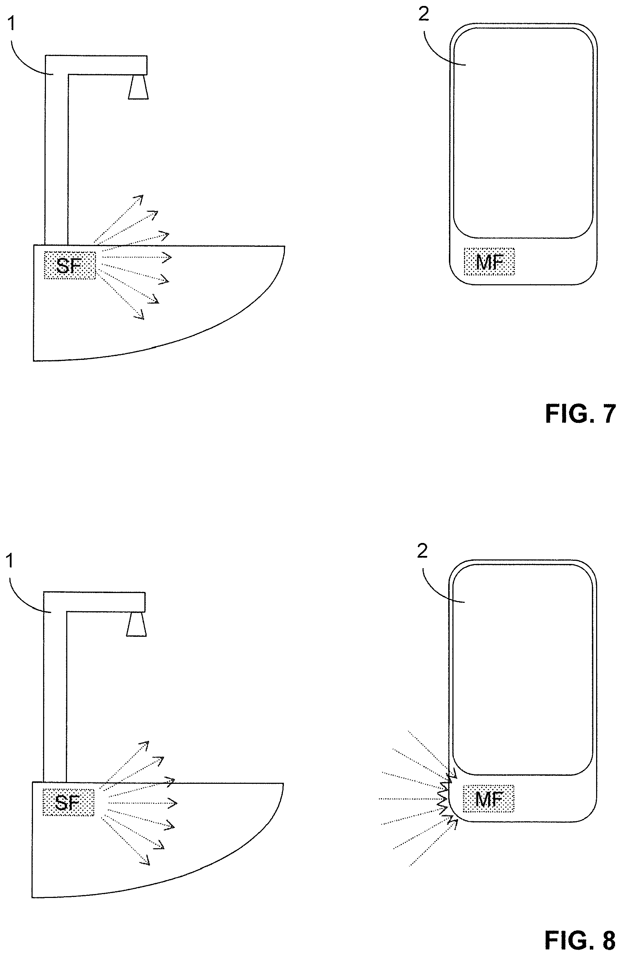

In einem, in **Figur 7** dargestelltem, Schritt E wird das Sanitäreinrichtung-Funkmodul SF in einem Modus betrieben, in welchem es Aufmerksamkeitshinweise aussendet. Während Schritts E ist das Sanitäreinrichtung-Funkmodul SF also funktechnisch sichtbar. Vorzugsweise ist das Sanitäreinrichtung-Funkmodul SF dazu konfiguriert, den Schritt E lediglich eine vordefinierte, zweite beschränkte Zeit lang durchzuführen, beispielsweise 60 Sekunden oder weniger, wodurch sichergestellt ist, dass das Sanitäreinrichtung-Funkmodul SF nicht aus Versehen permanent sichtbar bleibt. Bevorzugt wird bei Überschreiten dieses *time-out* das Sanitäreinrichtung-Funkmodul SF wieder in den Standby-Modus geschaltet.

Schritt E wird nach Schritt D bevorzugt automatisch ausgelöst, beispielsweise nachdem das Sanitäreinrichtung-Funkmodul SF entsprechende Aktivierung-Daten empfangen und ggf. verifiziert hat. Das Starten von Schritt E kann zur Sicherheit aber auch weiterer Schritte bedürfen, beispielsweise einer weiteren Manipulation des Initiierungsmittels 3.

In einem Schritt F wird das Master-Funkmodul MF in einem Modus betrieben, in welchem es Aufmerksamkeitshinweise empfangen kann. Dabei ist es irrelevant, ob Schritt F vor, mit oder nach Schritt E begonnen wird, solange, wie in **Figur 8** dargestellt, zu wenigstens in einem gewissen Zeitintervall das Sanitäreinrichtung-Funkmodul SF Aufmerksamkeitshinweise aussendet und das Master-Funkmodul MF diese empfangen kann.

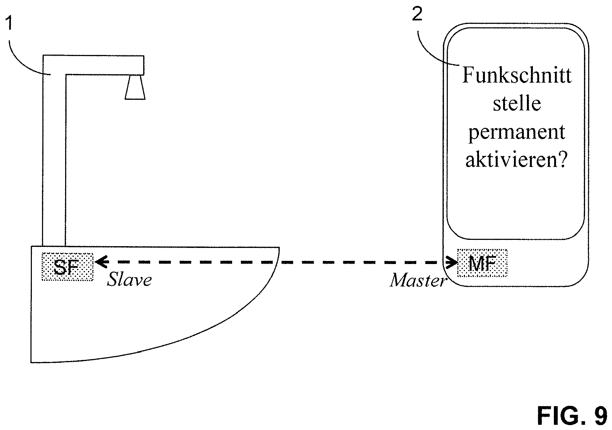

Dadurch ist es möglich, dass sich das Master-Funkmodul MF und das Sanitäreinrichtung-Funkmodul SF funktechnisch finden und - wie in **Figur 9** dargestellt - in Schritt G eine Datenverbindung zwischen ihnen hergestellt werden kann, in welcher das Master-Funkmodul MF als Master und das Sanitäreinrichtung-Funkmodul SF als Slave operieren.

Über diese Datenverbindung kann der Benutzer nun mit dem mobilen Gerät 2 auf das Sanitäreinrichtung-Funkmodul SF und damit verbundene Komponenten zugreifen, um beispielsweise Sensor-Daten auszulesen oder Firmware aufzuspielen. Zudem besteht die Möglichkeit, dass der Benutzer die Sanitäreinrichtung-Funkmodul SF permanent aktiviert, so dass das Sanitäreinrichtung-Funkmodul SF fortan permanent in einem Modus betrieben wird, in welchem es Aufmerksamkeitshinweise aussendet und somit für andere Funkmodule sichtbar ist.

**BEZUGSZEICHENLISTE**

| | | | |
|---|---|---|---|
| 1 | Sanitäreinrichtung | 3 | Initiierungsmittel |
| SF | Sanitäreinrichtung-Funkmodul | 31 | Mittel zur Manipulation der Stromspeisung |
| 2 | Mobiles Gerät | 32 | Sensor |
| MF | Master-Funkmodul | 4 | Bereitstellungsmittel |

## Patentansprüche

1. Verfahren zur Herstellung einer Datenverbindung zwischen einem in einer Sanitäreinrichtung (1) eingebettetem Sanitäreinrichtung-Funkmodul (SF) und einem Master-Funkmodul (MF), wobei das Master-Funkmodul (MF) und das Sanitäreinrichtung-Funkmodul (SF) dazu eingerichtet sind, Aufmerksamkeitshinweise auszusenden und zu empfangen, umfassend die folgenden Schritte:
Schritt B: Betreiben des Sanitäreinrichtung-Funkmoduls (SF) in einem Modus in dem Aufmerksamkeitshinweise empfangen werden können aber nicht ausgesendet werden;
Schritt C: Betreiben des Master-Funkmoduls (MF) in einem Modus in dem Aufmerksamkeitshinweise ausgesendet werden;
Schritt D: Übertragen von Aktivierung-Daten von dem Master-Funkmodul (MF) auf das Sanitäreinrichtung-Funkmodul (SF);
Schritt E: Betreiben des Sanitäreinrichtung-Funkmoduls (SF) in einem Modus in dem Aufmerksamkeitshinweise gesendet werden, und
Schritt F: Betreiben des Master-Funkmoduls (MF) in einem Modus in dem Aufmerksamkeitshinweise empfangen werden können;
Schritt G: Erstellen einer Datenverbindung zwischen dem Master-Funkmodul (MF) und dem Sanitäreinrichtung-Funkmodul (SF), bei welcher das Master-Funkmodul (MF) als Master operiert und das Sanitäreinrichtung-Funkmodul (SF) als Slave operiert.

2. Verfahren gemäss Anspruch 1, ferner umfassend folgenden Schritt:
Schritt A: Initiieren von Schritt B,
wobei Schritt A vorzugsweise umfasst:
• eine Manipulation der Stromspeisung des Sanitäreinrichtung-Funkmoduls (SF) oder eines damit verbundenen Gerätes (3, 31, 32);
• eine Aktion an einem mit dem Sanitäreinrichtung-Funkmodul (SF) verbundenen Sensors (32);
• ein drahtgebundenes Signal; und/oder
• ein nicht-drahtgebundenes Signal.

3. Verfahren gemäss Anspruch 2, wobei Schritt B nach dessen Auslösung nur eine erste beschränkte Zeit lang durchgeführt wird, wobei die erste beschränkte Zeit vorzugsweise 60 Sekunden oder weniger, bevorzugt 15 Sekunden oder weniger, beträgt.

4. Verfahren gemäss einem der Ansprüche 1 bis 3, wobei Schritt D nicht vor Schritt B und Schritt C durchgeführt wird.

5. Verfahren gemäss einem der Ansprüche 1 bis 4, wobei Schritt E nicht vor, vorzugsweise nach, Schritt D durchgeführt wird.

6. Verfahren gemäss einem der Ansprüche 1 bis 5, wobei Schritt G nicht vor den Schritten B bis F, vorzugsweise nach Schritt E, durchgeführt wird.

7. Verfahren gemäss einem der Ansprüche 1 bis 6, wobei der Schritt E nur eine zweite beschränkte Zeit lang durchgeführt wird, wobei die zweite beschränkte Zeit vorzugsweise 60 Sekunden oder weniger, bevorzugt 15 Sekunden oder weniger, beträgt.

8. Verfahren gemäss einem der Ansprüche 1 bis 7, wobei vor Schritt D Authentifizierung-Daten erfasst werden und wobei die erfassten Authentifizierung-Daten vorzugsweise in Schritt D von dem Master-Funkmodul (MF) auf das Sanitäreinrichtung-Funkmodul (SF) übertragen werden.

9. Verfahren gemäss einem der Ansprüche 1 bis 8, wobei Schritt E nur durchführt wird, wenn in Schritt D Authentifizierung-Daten übertragen wurden.

10. Verfahren gemäss einem der Ansprüche 1 bis 9, wobei das Master-Funkmodul (MF) und das Sanitäreinrichtung-Funkmodul (SF) dazu eingerichtet sind, sich über Bluetooth Low Energy zu verbinden, wobei vorzugsweise
in Schritt B das Sanitäreinrichtung-Funkmodul (SF) als Central oder Observer;
in Schritt C das Master-Funkmodul (MF) als Peripheral resp. Broadcaster; und
in Schritt E das Sanitäreinrichtung-Funkmodul (SF) als Peripheral operieren.

11. Sanitäreinrichtung (1) mit einem darin eingebetteten Sanitäreinrichtung-Funkmodul (SF), welches zur Durchführung des Verfahrens gemäss einem der Ansprüche 1 bis 10 konfiguriert ist.

12. Sanitäreinrichtung (1) gemäss Anspruch 11, aufweisend ein Initiierungsmittel (3) zur Initiierung des Schrittes B, wobei das Initiierungsmittel vorzugsweise umfasst:
• ein Mittel zur Manipulation der Stromspeisung (31) des Sanitäreinrichtung-Funkmoduls (SF) oder eines anderen, mit dem Sanitäreinrichtung-Funkmodul (SF) verbundenen Gerätes (32);
• einen mit dem Sanitäreinrichtung-Funkmodul (SF) verbundenen Sensor (32); und/oder
• einen Auslöser (31, 32) zur Auslösung eines drahtgebundenen und/oder nicht drahtgebundenen Signals, wobei der Auslöser (31, 32) vorzugsweise von einer Aussenseite der Sanitäreinrichtung (1) aus auslösbar ist.

13. Sanitäreinrichtung (1) gemäss einem der Ansprüche 11 oder 12, wobei ein Bereitstellungsmittel (4) zur Bereitstellung von Authentifizierung-Daten an der Sanitäreinrichtung (1) angeordnet ist, wobei das Bereitstellungsmittel (4) vorzugsweise einen Aufkleber mit einer Zeichenfolge und/oder einem Bildmuster umfasst.

14. Mobiles Gerät (2) aufweisend ein Master-Funkmodul (MF) welches zur Durchführung des Verfahrens gemäss einem der Ansprüche 1 bis 10 konfiguriert ist.

15. Kombination aus einer Sanitäreinrichtung (1) gemäss einem der Ansprüche 11 bis 13 und einem mobilen Gerät (2) gemäss Anspruch 14.
